# FASCICULE DE BREVET EUROPEEN

(11) **EP 0 599 691 B1**
(45) Date de publication et mention de la délivrance du brevet: **30.10.1996**
(21) Numéro de dépôt: 93402772.3
(22) Date de dépôt: 16.11.1993
(51) Int. Cl.: F03B 13/00, F03B 13/06, E03F 7/00, E03F 1/00, F03B 13/08

(54) **Installation pour la production d'énergie électrique et la régulation d'un écoulement hydraulique**
Einrichtung für hydraulische Flusssteuerung und elektrische Stromerzeugung
Installation for hydraulic flow control and electricity generation

(30) Priorité: 20.11.1992 FR 9213948
(43) Date de publication de la demande: 01.06.1994
(73) Titulaire: GTM BATIMENT ET TRAVAUX PUBLICS Société anonyme, 92000 Nanterre (FR)
(72) Inventeur: Moulliet, Claude, F-92000 Nanterre (FR)
(74) Mandataire: Lefebure, Gérard

(56) Documents cités:
- WO-A-83/04425
- FR-A- 525 293
- US-A- 4 182 128
- US-A- 4 282 444
- US-A- 4 310 769
- DATABASE COMPENDEX "Orbit" server qa=81086055, & UNDERGROUND SPACE vol. 5, no. 5, Mars 1981, pages 290-292 P. STAHRE 'Fundamentals of the use of rock tunnels for the storage of sewage water'
- DEPARTMENT OF ENERGY OAK RIDGE,TENNESSEE '"Energy storage in hard rock"'Num. NTN83-0221(C), DOE/TIC/EG-82/124
- DATABASE FLUIDEX E.S.A. server QA=77019550 & ENGINEERING NEWS REC. vol. 194, no. 21, 22 Mai 1975, page 12, 'Pumped storage hydro and sewage plants may go underground'
- DATABASE COMPENDEX E.S.A. server QA=89003167 & CANADIAN JOURNAL OF CIVIL ENGINEERING vol.15, no. 3, 3 Juin 1988 pages 389-396 W. BERGMAN ET AL 'Tunnel and reservoir plan solution to Chicago's combined sewer overflow, basement flooding and pollution'
- DATABASE CEDB S.T.N. server AN=9004782, & CIVIL ENGINEERING (ISSN 0885-7024) vol. 60,, no. 12, Décembre 1990 pages 42-44, J.HOLZBACH 'Rochester stops the deluge'

## Description

La présente invention concerne une installation pour la production d'énergie electrique, du type comprenant au moins un premier réservoir d'eau situé à un premier niveau, au moins un deuxième réservoir d'eau situé profondément dans le sol à un second niveau nettement plus bas que le premier niveau, au moins une première conduite reliant les deux réservoirs et munie d'une vanne mettant les deux réservoirs en communication lorsqu'elle est ouverte, au moins une centrale hydroélectrique située au second niveau ou à un niveau proche de celui-ci et comportant au moins un groupe pompe-turbine réversible qui est raccordé, du point de vue hydraulique, à ladite première conduite et qui est connectable, du point de vue électrique, à un réseau de distribution de courant.

Les installations du type décrit ci-dessus sont bien connues et sont usuellement appelées centrales hydrauliques d'accumulation par pompage. Les centrales de ce genre ont pour fonction de fournir, aux heures de pointe de consommation d'énergie électrique, de l'energie électrique au réseau de distribution de courant auquel elles sont interconnectées. En période creuse de consommation d'énergie électrique, la capacité excédentaire du réseau de distribution est utilisée pour remplir par pompage le réservoir supérieur. De l'énergie est ainsi mise en réserve par accumulation hydraulique. En période de pointe, la centrale hydroélectrique fournit de l'énergie électrique au réseau de distribution par turbinage de l'eau accumulée dans le réservoir superieur, qui est restituée au réservoir inférieur. De telles installations hydroélectriques sont décrites dans les brevets US-A-4 182 128 et 4 282 444, ainsi que dans l'article "Energy storage in hard rock" publié par le Department of Energy, Oak Ridge, Tennesse, Num. NTN 83-022i(c), DDB/TIC/E13-82/124. Le brevet US-A-4 310 769 décrit aussi une installation hydroélectrique du type sus-indiqué, qui a la particularité d'être combinée à une écluse en vue d'en rentabiliser le fonctionnement. Dans ce dernier document le sas de l'écluse et/ou son bief amont servent de réservoir supérieur pour l'installation hydroélectrique.

Par ailleurs, les grandes agglomérations urbaines rendent particulièrement difficile, par l'étendue de leur territoire et l'importance de leur population, le traitement de divers problèmes liés d'une part à la nature et, d'autre part, à l'activité humaine. Parmi ces problèmes, on peut notamment citer :
1°) l'étalement des débits de pointe dans les réseaux d'eaux usées et pluviales (reseau d'assainissement);
2°) la fourniture d'énergie électrique dans les périodes où la demande est particulièrement forte, notamment le matin et le soir en hiver, mais éventuellement aussi dans les périodes creuses en cas de défaillance d'un élément de production de courant ou d'une ligne de transport de courant.

En ce qui concerne l'étalement des débits de pointe d'eaux pluviales, en milieu urbain les eaux pluviales mêlées aux eaux usées doivent faire l'objet d'un traitement physico-chimique et bactériologique avant leur rejet dans le milieu naturel, en raison des nombreux facteurs poluants dont elles sont chargées. En l'état actuel de la technique et des installations existantes, les usines ou autres stations d'épuration destinées à ce traitement ne peuvent absorber que des débits moyens. Confrontée à des débits de pointe occasionnels superieurs à la capacité de traitement de ces stations et parfois aussi à la capacité des collecteurs du réseau d'assainissement, l'autorité chargée de l'aménagement du territoire peut adopter plusieurs stratégies :
a) rejeter directement dans le milieu naturel le surplus d'eaux polluées, ce qui entraîne des conséquences de plus en plus mal acceptées par la population;
b) consentir des investissements très importants pour adapter la capacité de traitement aux débits de pointe. Cette solution est difficilement justifiable au niveau économique;
c) augmenter la capacité de rétention du réseau de collecte des eaux, afin d'étaler le débit de pointe et de répartir dans le temps le traitement du volume d'eau excédentaire. Cette augmentation de capacité peut être obtenue soit par le dimensionnement plus important des collecteurs et autres émissaires du réseau d'assainissement, soit par l'adjonction de réservoirs de stockage raccordés audit réseau. Malheureusement, il n'y a généralement pas de place pour loger de grands réservoirs au sein ou à proximité des agglomérations urbaines, où, en outre, le prix des terrains est en général très élevé.

On mesure dans ces conditions l'intérêt que pourrait présenter la création de réservoirs de stockage d'eaux pluviales à proximité immédiate de grandes agglomérations urbaines ou même en leur sein.

En ce qui concerne la fourniture d'énergie électrique aux heures de pointe ou en cas de défaillance d'un élément de production de courant, l'ajustement de la production électrique aux pointes de consommation nécessite des installations dont la production puisse varier très rapidement, d'une valeur nulle à une valeur maximale. Les types d'installation susceptibles de satisfaire à cet impératif sont essentiellement de deux sortes :
a) les usines hydroélectriques situées sur des cours d'eau;
b) les usines thermiques équipées de genérateurs à démarrage rapide, telles les turbines à gaz.

Or, ces usines ne peuvent être implantées qu'à une certaine distance des agglomérations urbaines. La production qu'elles génèrent nécessite, de ce fait, de nouvelles lignes de transport qui se révèlent de plus en plus difficiles à implanter dans le tissu urbain et péri-urbain.

On mesure, dans ces conditions, l'intérêt que pourrait présenter un système de production d'énergie électrique pouvant être implanté à proximité immédiate de grandes agglomérations urbaines, ou même en leur sein.

La présente invention a donc pour but de résoudre le double problème de l'étalement des débits de pointe dans un réseau d'assainissement et de la fourniture d'énergie électrique en particulier dans les périodes de pointe de consommation, le matin ou le soir en hiver, mais éventuellement aussi en période creuse en cas de défaillance d'un élément de production de courant ou d'une ligne de transport de courant.

A cet effet, l'installation selon la présente invention, du type indiqué en préambule, est caractérisée en ce que pour permettre une régularisation d'un écoulement des eaux pluviales dans un réseau d'assainissement, l'installation comprend en outre au moins une seconde conduite munie d'une vanne et reliant ledit réseau d'assainissement au second réservoir directement et/ou à travers le groupe pompe-turbine de la centrale hydroélectrique, l'eau stockée temporairement dans le second réservoir étant renvoyée au réseau d'assainissement par une pompe et/ou par ledit groupe pompe-turbine.

Ainsi, l'invention est essentiellement caractérisée par la combinaison d'un réseau d'assainissement et d'une centrale hydroélectrique d'accumulation par pompage, dans laquelle le second réservoir est profondément enterré et dans laquelle au moins ce second réservoir est raccordé au réseau d'assainissement pour pouvoir servir de réservoir de stockage temporaire pour l'étalement des débits de pointe des eaux de pluie dans ledit réseau. Ainsi, la centrale hydroélectrique permet de produire de l'énergie électrique en utilisant l'eau accumulée dans le réservoir supérieur ou, selon un autre aspect de l'invention, comme on le verra plus loin, en utilisant l'eau convenablement traitée provenant du réseau d'assainissement, tandis que les débits de pointe des eaux pluviales dans le réseau d'assainissement peuvent être étalés en stockant temporairement une partie de ces débits au moins dans le réservoir inférieur et éventuellement aussi dans le réservoir supérieur si ce dernier est constitué par un réservoir artificiel. Les réservoirs inférieur et supérieur peuvent être tous les deux des réservoirs artificiels créés ou aménagés à des profondeurs différentes dans le sous-sol. Selon un autre aspect de l'invention, le réservoir supérieur peut être une étendue d'eau naturelle telle que rivière ou lac. Dans le cas où le réservoir supérieur est constitué par une rivière, l'installation selon l'invention peut être utilisée, comme on le verra plus loin, pour régulariser en cas de besoin une partie du cours de la rivière.

D'autres buts, caractéristiques et avantages de l'invention apparaîtront plus clairement à la lecture de la description suivante de divers modes de réalisation de l'invention donnés à titre d'exemple en référence aux dessins annexés sur lesquels :
- la figure 1 est un schéma de principe illustrant un premier mode de réalisation de l'invention;
- la figure 2 est un schéma de principe illustrant un autre mode de réalisation de la présente invention;
- la figure 3 est une carte représentant la partie nord-ouest de la région parisienne et montrant un exemple d'application de l'invention à cette région;
- les figures 4a à 4e sont des vues schématiques en coupe verticale passant par l'axe longitudinal du tunnel servant de réservoir inférieur dans l'installation correspondant à l'application représentée sur la figure 3, les figures 4a à 4e correspondant à différents modes de fonctionnement de l'installation.

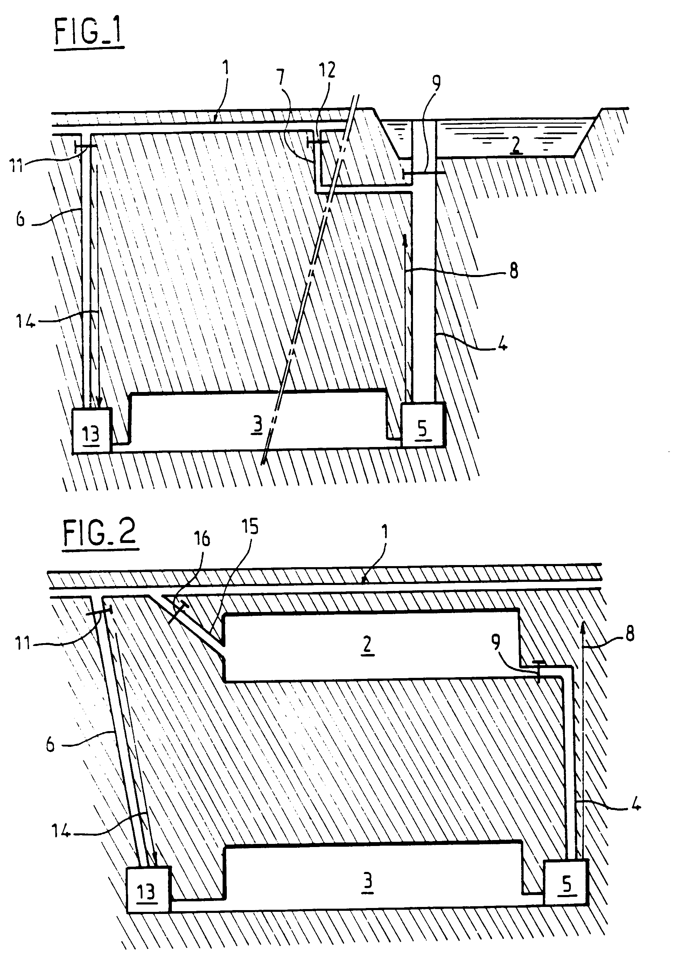

L'installation selon l'invention, destinée à être implantée au sein ou à proximité d'une agglomération urbaine pour la production d'énergie électrique et la régularisation d'un écoulement hydraulique, par exemple l'écoulement des eaux de pluie dans le réseau d'assainissement 1 de l'agglomération urbaine, comprend essentiellement au moins un réservoir supérieur 2 et au moins un réservoir inférieur 3 reliés l'un à l'autre par au moins une conduite forcée 4 qui débouche, à sa partie inférieure, sur une centrale hydroélectrique 5, située au même niveau ou approximativement au même niveau que le réservoir inférieur 3 et reliée à celui-ci, ainsi qu'au moins une autre conduite 6 ou 7 reliant le réseau d'assainissement 1 au réservoir inférieur 3, comme montré dans les figures 1 et 2. La centrale hydroélectrique 5 est similaire à celles trouvées dans les installations classiques de production d'électricité à double réservoir à accumulation par pompage, et elle est connectée au réseau électrique général par une ligne électrique 8.

Dans le cas où il existe au sein de l'agglomération urbaine ou à proximité de celle-ci une ou plusieurs étendues d'eau naturelles (rivière, canal, lac), dont l'eau peut être en partie utilisée pour turbinage dans la centrale hydroélectrique 5, le réservoir supérieur 2 peut être avantageusement constitué par une ou plusieurs desdites étendues d'eau naturelles comme montré dans la figure 1. Dans ce cas, la conduite 4 est terminée, en partie supérieure, par une prise d'eau qui peut être similaire à celle utilisée dans les installations hydroélectriques classiques. La conduite 4 est munie, dans sa partie supérieure, d'une vanne 9 qui permet, lorsqu'elle est ouverte, d'envoyer de l'eau à la centrale hydroélectrique 5 et, de là, au réservoir inférieur 3 à partir de l'étendue d'eau naturelle formant le réservoir supérieur 2. La conduite 6 relie directement le réseau d'assainissement 1 au réservoir inférieur 3, tandis que la conduite 7 relie indirectement le réseau 1 au réservoir inférieur 3, la partie inférieure de cette conduite 7 étant raccordée à la conduite 4 entre la vanne 9 et la centrale hydroélectrique 5. Des vannes 11 et 12 sont respectivement insérées dans les conduites 6 et 7 et permettent, lorsqu'elles sont ouvertes, de dériver vers le réservoir inférieur 3 une partie de l'eau circulant dans le réseau d'assainissement 1.

L'installation de la figure 1 fonctionne de la manière suivante :
a) En période de pointe de la consommation de courant, c'est-à-dire le matin et le soir en hiver, ou exceptionnellement pendant une période de courte durée en cas de défaillance d'un élément de production de courant du réseau électrique général, on ouvre la vanne 9 de sorte que le réservoir inférieur 3 reçoit à travers la conduite 4 et la centrale hydroélectrique 5 l'eau en provenance de l'étendue d'eau formant le réservoir supérieur 2. Au passage dans la centrale 5, l'eau est turbinée pour produire de l'énergie électrique qui est fournie au réseau par la ligne 8. Le turbinage de l'eau est poursuivi selon les besoins en énergie et jusqu'à remplir éventuellement la totalité du réservoir 3;
b) Entre les périodes de pointe de consommation de courant, c'est-à-dire quand le réseau électrique général produit une quantité excedentaire d'énergie électrique disponible à faible coût, la centrale hydroélectrique 5 utilise cette énergie électrique excédentaire du réseau, fournie par la ligne 8, pour fonctionner en mode pompage afin de vider le réservoir 3 et restituer l'eau à l'étendue d'eau 2, de façon à ce que le réservoir 3 soit vide avant la période de pointe suivante. Compte tenu de ce qu'environ dix heures s'écoulent entre deux périodes de pointe successives et de ce que l'opération de vidage du réservoir 3 peut être étalée sur cette période d'environ dix heures, le rapport entre la puissance fournie par turbinage et la puissance consommée par pompage par la centrale hydroélectrique 5 est de l'ordre de 5.
c) Dans les périodes où de fortes pluies sont susceptibles de se produire, le réservoir inférieur 3 doit être vide pour être prêt à recevoir une partie des eaux transitant par le réseau 1 lorsqu'on ouvre la vanne 11 et/ou la vanne 12 (la vanne 9 étant bien entendu fermée à ce moment). Une fois l'averse passée, l'eau contenue dans le réservoir 3 est pompée par l'usine hydroélectrique 5 pour être restituée au réseau 1 par la conduite 4 et la conduite 7 à un débit compatible avec la capacité de traitement de la ou des stations d'épuration auxquelles le réseau 1 est raccordé. Si la conduite 7 n'est pas prévue, une pompe de relèvement 13, pouvant être alimentée en courant par une ligne électrique 14 à partir du réseau électrique général, doit être insérée dans la conduite 6 pour restituer les eaux de pluie contenues dans le réservoir 3 au réseau 1. On peut se dispenser de la pompe 13 si la conduite 7 est prévue. On notera que dans ce mode de fonctionnement il n'y a aucune communication entre les eaux pluviales du réseau 1 et l'étendue d'eau 2, ce qui évite toute pollution de cette dernière.

Il est important de s'assurer que le réservoir inférieur 3 soit vide au moment de répondre aux deux missions qui lui sont dévolues (turbinage électrique d'une part et stockage temporaire des eaux pluviales d'autre part). On pourrait craindre par exemple, qu'une forte averse intervienne juste après une période de pointe de consommation électrique, alors que le réservoir 3 n'a pas encore eu le temps d'être vidé, ou qu'une averse intervienne juste avant une période de pointe de consommation électrique, empêchant alors la production d'énergie électrique par la centrale 5.

Toutefois, la réponse a ces deux missions est très distincte dans le temps. En effet, les périodes de pointe de consommation électrique sont concentrées sur les jours froids de l'hiver, précisément à une période où ne peuvent se produire que très exceptionnellement de fortes averses. Dans ces conditions, il est pratiquement exclu qu'un conflit puisse survenir dans l'utilisation du réservoir 3 qui est ainsi disponible pour répondre successivement, au cours de l'année, aux deux missions distinctes précitées, à savoir production d'énergie électrique en périodes de pointe de consommation pendant les périodes froides, d'une part, et régularisation du débit des eaux pluviales dans le réseau 1 le reste de l'année, d'autre part.

En fait, le seul conflit qui pourrait survenir dans l'utilisation du réservoir 3 serait le cas où une défaillance d'un élément de production du réseau électrique général ou d'une ligne de transport de courant se produirait à un moment où de fortes averses sont annoncées par la météorologie. Pour la mise en oeuvre de l'installation selon l'invention, il sera donc nécessaire en pratique de définir une priorité d'utilisation du réservoir 3 pour régler un tel conflit. Par exemple, la priorité pourra être donnée à la régularisation de l'écoulement des eaux pluviales dans le réseau 1.

Lorsqu'il n'existe au sein de l'agglomération urbaine ou à proximité de celle-ci aucune étendue d'eau naturelle dont l'eau peut ètre en partie utilisée pour turbinage, il est alors nécessaire de créer un ou plusieurs réservoirs supérieurs 2, soit à la surface du sol si cela est réalisable à un faible coût, soit à faible profondeur dans le sol, pour réaliser l'installation de l'invention. La figure 2 montre schématiquement une installation de ce genre, dans laquelle le réservoir supérieur 2 et le réservoir inférieur 3 sont tous les deux aménagés dans le sous-sol à des profondeurs différentes, les deux réservoirs 2 et 3 ayant de préférence la même capacité. Dans la figure 2, les éléments de l'installation qui sont identiques ou qui jouent le même rôle que ceux de l'installation de la figure 1 sont désignés par les mêmes numéros de référence. Dans l'installation de la figure 2, le réservoir supérieur 2 est aussi raccordé au réseau d'assainissement 1 par une conduite 15 munie d'une vanne 16.

Dans l'installation de la figure 2, le réservoir supérieur 2 joue le même rôle que l'étendue d'eau naturelle 2 de l'installation de la figure 1. Les deux installations fonctionnent de manière semblable et, pour cette raison, on ne décrira que les différences de fonctionnement de l'installation de la figure 2 par rapport à celle de la figure 1. Alors que dans l'installation de la figure 1 l'étendue d'eau 2 contient toujours de l'eau, le réservoir supérieur 2 de l'installation de la figure 2 est normalement maintenu vide pendant les saisons où il peut se produire de fortes averses. Dans ces saisons, en cas de fortes averses, une partie des eaux de pluie transitant par le réseau d'assainissement 1 peut être stockée temporairement dans les réservoirs 2 et 3 par ouverture des vannes 11 et 16. Une fois l'averse passée, la vanne 16 est fermée et les eaux de pluie stockées dans les réservoirs 2 et 3 sont restituées au réseau 1 par la conduite 6 au moyen de la pompe 13, la vanne 9 étant ouverte pour permettre à l'eau contenue dans le réservoir 2 de descendre par la conduite 4 dans le réservoir 3. Au passage dans la centrale hydroélectrique 5 l'eau est turbinée pour fournir de l'énergie électrique qui peut être utilisée pour alimenter la pompe 13. A titre de variante, on peut prévoir une autre pompe (non montrée) insérée dans la conduite 15 pour restituer au réseau 1 l'eau contenue dans le réservoir 2.

Juste avant l'hiver ou les périodes froides, le réservoir 2, s' il est vide, doit être rempli d'eau à partir du réseau 1 par la conduite 15 et en ouvrant la vanne 16, la vanne 9 étant alors fermée, afin que l'installation soit prête à satisfaire à une demande d'énergie électrique en période de pointe de consommation de courant. En période de pointe de consommation, la vanne 9 est ouverte et l'eau provenant du réservoir 2 est turbinée dans la centrale électrique 5 pour produire de l'énergie électrique. Entre deux périodes successives de pointe de consommation de courant, la centrale 5 fonctionne en mode pompage et restitue au réservoir 2 l'eau contenue dans le réservoir 3.

Bien qu'il ait été indiqué précédemment que les réservoirs 2 et 3 de l'installation de la figure 2 ont la même capacité, le réservoir 3 peut avoir, à titre de variante, une capacité double de façon à pouvoir stocker temporairement à lui seul une partie des eaux pluviales transitant par le réseau 1 en cas de fortes averses. Avec un tel dimensionnement du réservoir 3, le réservoir 2 peut être maintenu rempli d'eau au moins pendant les périodes où il ne se produit pas de fortes averses, afin de pouvoir répondre en cas de besoin à une demande d'énergie électrique, a condition bien entendu qu'à ce moment le réservoir inférieur 3 soit vide ou au minimum à moitié vide.

L'eau qui transite par le réseau 1 est en général une eau polluée. Par conséquent, dans la pratique, il pourra être nécessaire de soumettre à un prétraitement l'eau qui est envoyée et stockée temporairement dans le réservoir 3 des installations des figures 1 et 2 et également l'eau qui est envoyée et stockée temporairement dans le réservoir 2 de l'installation de la figure 2. Par exemple, des unités de filtrage (dégrillage) peuvent être insérées à la partie supérieure des conduites 6, 7 et 15 afin d'éliminer au moins les objets solides et autres macroparticules contenues dans l'eau transitant par le réseau 1.

Bien que les figures 1 et 2 ne montrent qu'un seul réservoir supérieur 2 et un seul réservoir inférieur 3, il va de soi que l'on peut prévoir plusieurs réservoirs supérieurs et plusieurs réservoirs inférieurs et que ces réservoirs peuvent être reliés les uns aux autres de diverses manières, en série, en parallèle ou en série-parallèle, et mis en service selon les besoins ou selon la capacité totale de stockage d'eau désirée, par ouverture de vannes respectives appropriées. Par exemple, certains réservoirs peuvent être mis en service pendant que d'autres sont mis hors service pour des raisons d'entretien ou de réparation.

Le réservoir 3 de la figure 1 ou les réservoirs 2 et 3 de la figure 2 peuvent se présenter sous la forme de cavités souterraines, soit existantes, soit à créer par l'emploi de différentes techniques de creusement (tunneliers, boucliers, excavation à l'explosif ou à l'aide de machines ponctuelles, etc ...). Le ou les réservoirs 2, quand ils sont souterrains, sont implantés à une faible profondeur dans le sol (au plus quelques dizaines de mètres), tandis que le ou les réservoirs 3 sont implantés à grande profondeur (au moins 100 mètres, de préférence environ 200 mètres).

Le volume unitaire des cavités formant les réservoirs 2 et 3 peut être très variable en fonction des besoins, des conditions géotechniques, des techniques de creusement utilisées, et il peut varier de plusieurs dizaines à plusieurs centaines de milliers de m³, voire quelques millions de m³. En fait, la capacité globale des réservoirs 2 et 3 dépend bien entendu des besoins recensés en matière de stockage des eaux pluviales et en matière de production d'énergie électrique, ces besoins dépendant eux-mêmes fortement de la taille de l'agglomération urbaine, des conditions géographiques, de la pluviométrie, des risques de pollution contre lesquels la puissance publique désire se prémunir, etc ....

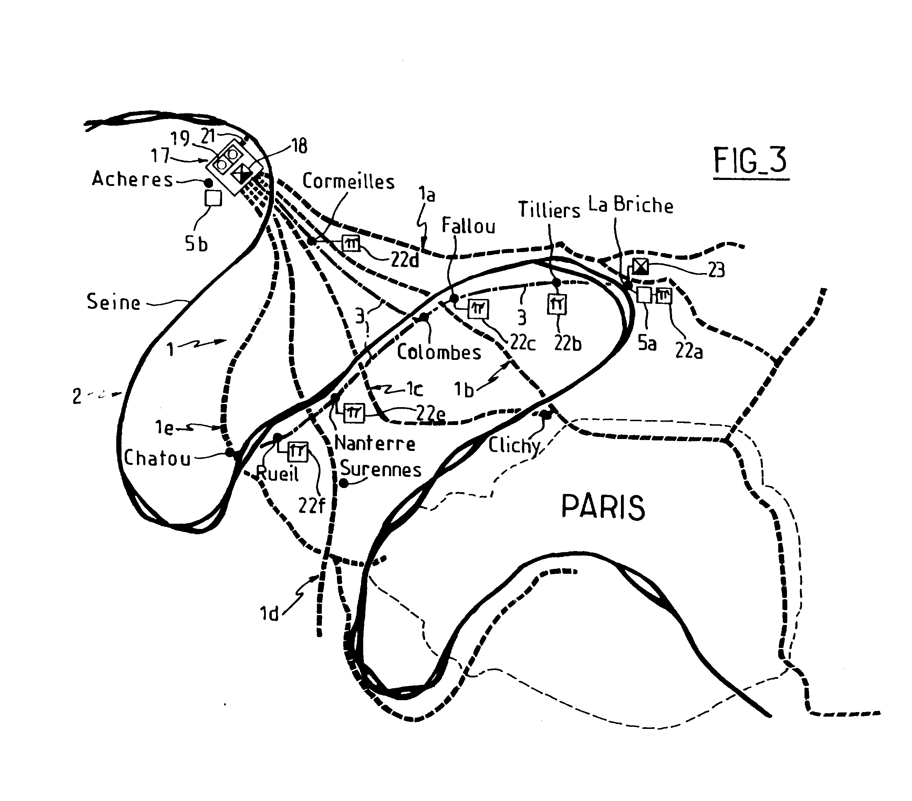

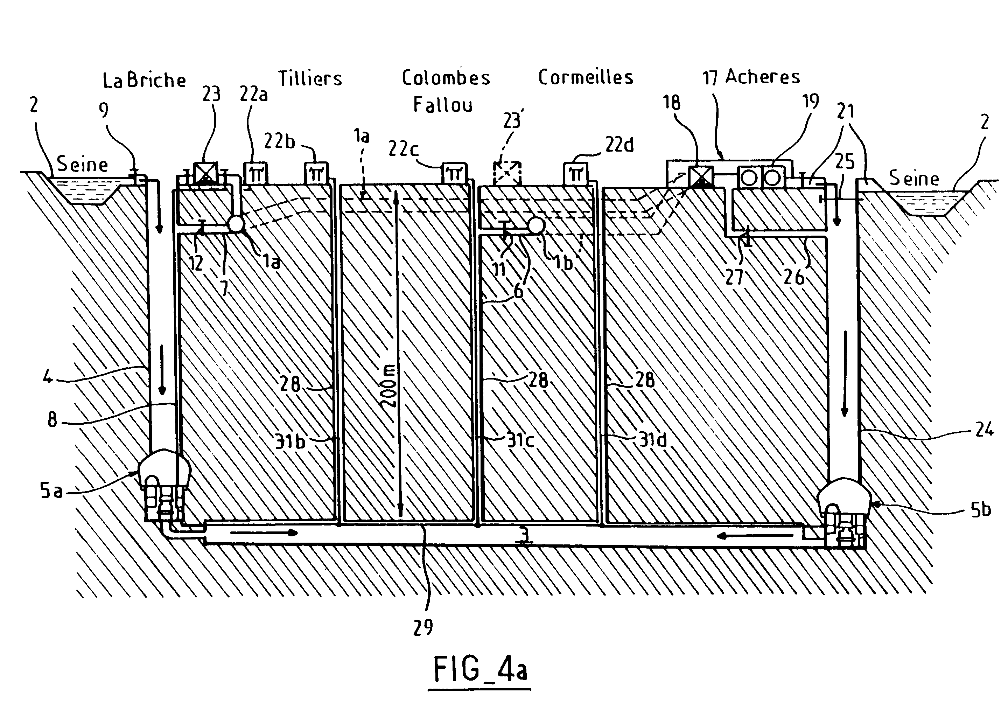

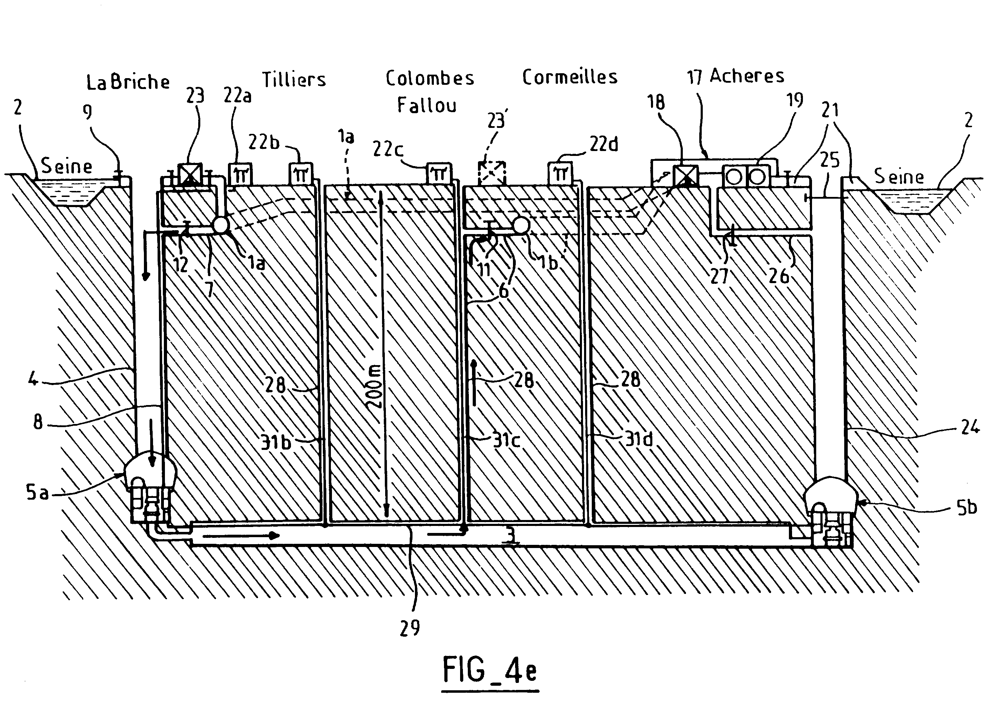

On décrira maintenant un exemple de réalisation de l'invention appliquée à la région parisienne en faisant référence aux figures 3 et 4a à 4e.

Dans la carte de la figure 3, la ligne 2 en trait fort continu présente la Seine, qui peut jouer le rôle du réservoir supérieur 2 de la figure 1, les lignes 1a à 1e en tirets forts représentent les principaux émissaires du réseau d'assainissement de la partie nord-ouest de la région parisienne (les émissaires 1a, 1b, 1c et le existent déjà, tandis que l'émissaire 1d est actuellement en construction); le bloc 17 désigne la station d'épuration des eaux usées d'Achères, à laquelle aboutissent les émissaires 1a, 1b, 1c et 1e et aboutira l'émissaire 1d; la station d'épuration 17 comporte au moins une unité de prétraitement 18 (élimination des objets solides et des grosses particules contenues dans les eaux usées par exemple par dégrillage, bassin de dessablement, etc.) et plusieurs unités de traitement 19 (traitement bactérien, bassins de décantation, etc ...) pour traiter les eaux usées de manière classique avant de les rejeter dans la Seine par le canal d'évacuation 21; les blocs 22a à 22f désignent des postes de transformation existants qui font partie du réseau électrique général d'alimentation de la région parisienne; le bloc 23 désigne une unité de prétraitement semblable à l'unité 18, située à La Briche pour prétraiter les eaux usées en provenance de l'émissaire 1a.

Sur la carte de la figure 3, on a également représenté par un fort trait mixte 3 un réservoir qui peut être par exemple réalisé sous la forme d'un tunnel creusé en sous-sol, par exemple à 200 mètres de profondeur, et s'étendant depuis la ville de La Briche jusqu'à la station d'épuration d'Achères en passant par la ville de Colombes; les blocs 5a et 5b désignent des centrales hydroélectriques souterraines à implanter respectivement aux extrémités du tunnel 3.

Les éléments décrits ci-dessus ont également été reportés dans les figures 4a-4e qui représentent une coupe verticale passant par l'axe longitudinal du tunnel 3 et développée à plat. Dans les figures 4a à 4e, on a également représenté la conduite 7 qui met l'émissaire la en communication avec la conduite forcée 4 quand la vanne 12 est ouverte; la conduite 6 qui met l'émissaire 1b en communication avec le tunnel 3 quand la vanne 11 est ouverte; la conduite forcée 24 qui relie le canal d'évacuation 21 de la station d'épuration 17 à la centrale hydroélectrique 5b quand la vanne 25 est ouverte, et qui relie, avec une conduite 26, la centrale hydroélectrique 5b à la station d'épuration 17 en un point situé entre l'unité de prétraitement 18 et les unités de traitement 19 quand la vanne 27 est ouverte et la vanne 25 fermée; des cheminées 28 qui mettent le tunnel 3 en communication avec l'atmosphère pour la ventilation du tunnel 3 et/ou l'équilibrage des pressions dans celui-ci. On notera que la conduite forcée 6 peut être installée dans l'une des cheminées 28. Sur les figures 4a-4e, on a également représenté la ligne électrique 8 qui connecte la centrale hydroélectrique 5a au poste de transformation 22a, la ligne électrique 29 qui interconnecte les deux centrales hydroélectriques 5a et 5b et les lignes électriques 31b, 31c et 31d qui interconnectent la ligne 29 respectivement aux postes de transformation 22b, 22c et 22d. Comme montré dans les figures 4a-4e, le puits foré pour la conduite forcée 4, le tunnel 3, les cheminées 28 et éventuellement la conduite 24 peuvent avantageusement servir de passage pour les lignes électriques 8, 29 et 31.

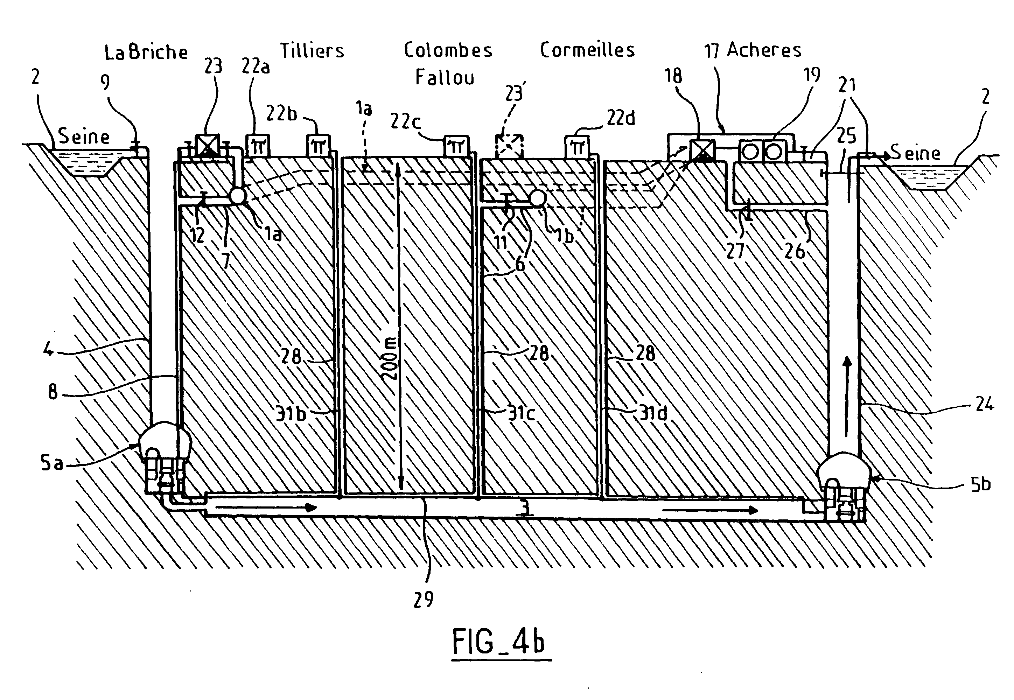

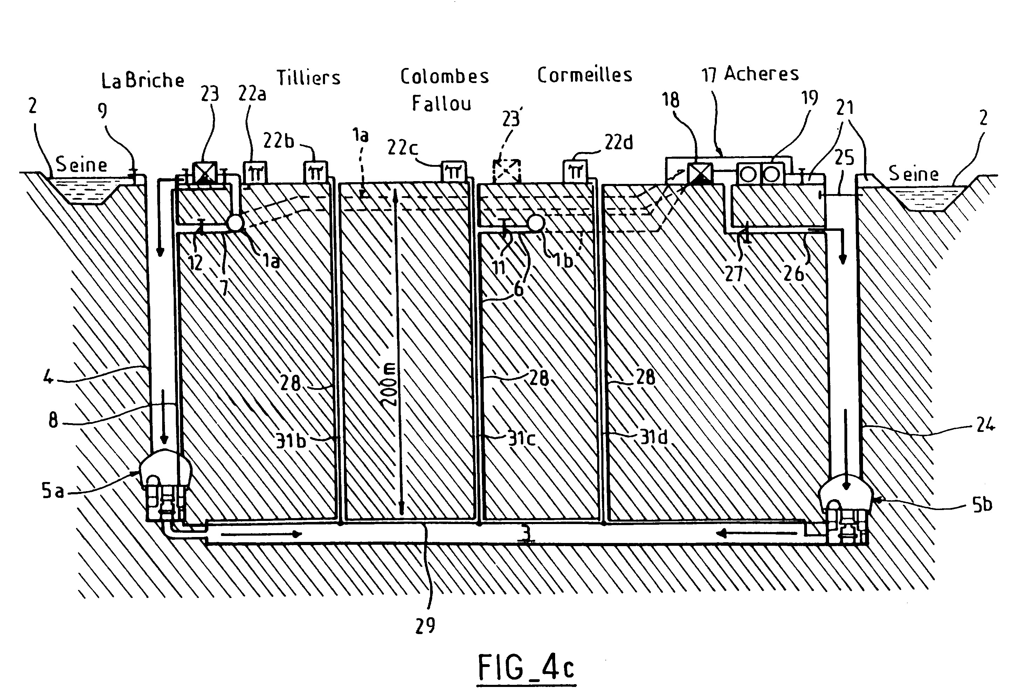

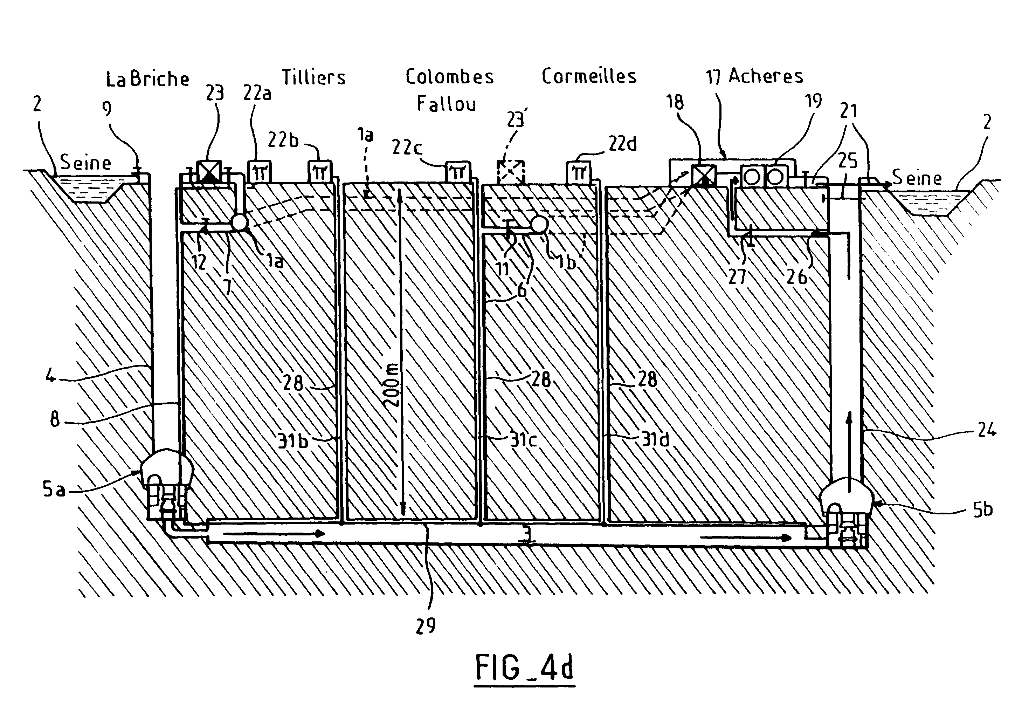

Ainsi que cela a déjà été indiqué plus haut, les émissaires la à le sont déjà existants ou en cours de construction, la station d'épuration 17 est déjà existante, de même que les postes de transformation 22a à 22f. Pour réaliser une installation selon l'invention, il suffirait donc, dans l'exemple des figures 3 et 4, de creuser les puits nécessaires à la mise en place des conduites 4, 6 et 24, de mettre en place ces conduites et les raccorder aux émissaires 1a et 1b et à la station d'épuration 17 comme montré dans les figures 4a-4e, d'installer une prise d'eau en Seine avec une vanne 9 à La Briche, de raccorder l'unité de prétraitement 23 à la conduite 4, de creuser le tunnel 3, de construire les centrales hydroélectriques 5a et 5b aux extrémités du tunnel 3, de forer les cheminées de ventilation ou d'équilibrage 28, d'installer les lignes électriques 8, 29 et 31 et de prévoir éventuellement une ou plusieurs unités de prétraitement supplémentaires, comme par exemple une unité 23' qui pourra être implantée à Colombes-Fallou pour prétraiter les eaux provenant de l'émissaire 1b avant de les envoyer dans le tunnel 3 par la conduite 6.

Dans l'exemple de réalisation décrit ci-dessus, dans lequel le tunnel 3, situé à une profondeur d'environ 200m, s'étend de la ville de La Briche jusqu'à la station d'épuration d'Achères en passant par Colombes, soit un parcours d'environ 14 kilomètres de long, on obtient une capacité de stockage d'eau d'environ 500 000 m³ pour un tunnel de 6,80m de diamètre intérieur.

La centrale hydroélectrique 5a peut comporter par exemple une unité hydroélectrique de production équipée de deux groupes principaux à axe vertical (turbine Francis et alternateur de 35 MVA). La centrale hydroélectrique 5b peut comporter par exemple une unité de production hydroélectrique équipée de deux groupes principaux à axe vertical (pompe-turbine réversible de type Francis et alternateur de 25 MVA). Dans ces conditions, de l'énergie électrique peut être produite de la manière suivante :
1°) En période de pointe de consommation d'énergie et en cas de défaillance du réseau, on peut capter les eaux :
   a - en Seine à La Briche (figure 4a), ces eaux étant turbinées pendant 2 heures à raison de 40m³ par seconde, soit 12% du débit moyen de la Seine. La centrale 5a fournit dans ce cas une puissance de 70 MW.
   b - en captant les eaux propres à la sortie de la station d'épuration d'Achères (voir aussi la figure 4a) à raison de 30m³ par seconde pendant 2 heures. La centrale hydroélectrique 5b fournit alors une puissance de 50 MW qui s'ajoute à celle fournie par la centrale 5a.

   Entre les périodes de pointe, l'eau stockée dans le réservoir 3 est restituée à la Seine à Achères en pompant l'eau dans le réservoir 3 pendant les heures creuses à l'aide de la centrale 5b à raison de 20m³ par seconde pendant environ 8 heures (figure 4b). L'eau est ainsi rejetée à 33 kilomètres en aval du captage de La Briche et ne perturbe pas le cours de la Seine dans l'agglomération parisienne.
2°) En cas de défaillance du réseau électrique, on peut :
   a - turbiner les eaux propres à la sortie de la station d'épuration d'Achères à raison de 30m³ par seconde (figure 4a) sans perturber le cours de la Seine.
   b - turbiner l'eau captée en Seine à La Briche à raison de 0 à 30m³ par seconde, la valeur de de débit étant déterminée en fonction de celui de la Seine afin de ne pas perturber son régime en période d'étiage.

   Dans ces conditions, on dispose d'une puissance d'au moins 50 MW fournie par la centrale 5b et éventuellement d'une puissance supplémentaire fournie par la centrale 5a pour pallier la défaillance du réseau L'eau accumulée dans le tunnel 3 est ensuite restituée à la Seine à Achères pendant les heures creuses (figure 4b) de la manière déjà décrite plus haut.
3°) En cas de fortes averses, la régularisation du débit des eaux pluviales dans un ou plusieurs des émissaires du réseau d'assainissement 1, par exemple dans l'émissaire 1a, peut être effectuée comme montré dans la figure 4c. Une partie de l'eau transitant dans l'émissaire 1a est dérivée par l'unité de prétraitement 23 et par la conduite 4 vers le tunnel 3 et une autre partie est dérivée par les conduites 26 et 24 vers le tunnel 3. Cette dernière dérivation soulage la station d'épuration 17 d'une partie des eaux à traiter par les unités de traitement 19, S'il s'agit d'un orage très localisé, et si tous les émissaires du réseau d'assainissement 1 ne sont pas saturés, on peut également utiliser les émissaires non saturés, par exemple l'émissaire 1b, comme capacité de stockage et de transport des eaux pluviales. Ceci peut être effectué par siphonnage du ou des émissaires saturés, par exemple l'émissaire 1a, à travers le tunnel 3 et la conduite 6 comme montré dans la figure 4e.

Une fois l'averse ou l'orage passé, l'eau stockée dans le tunnel 3 est restituée à la Seine à Achères après traitement par la station d'épuration 17 comme indiqué dans la figure 4d, à raison par exemple de 2 à 3m³ par seconde pendant 50 heures, afin de ne pas surcharger l'unité de traitement 19 de la station d'épuration qui doit continuer à traiter les eaux usées provenant du réseau d'assainissement.

D'après ce qui précède, on voit que le tunnel 3 permet, en plus de sa fonction de stockage d'eau, de réaliser un maillage au moins entre certains des émissaires du réseau d'assainissement 1, contribuant ainsi à mieux régulariser le débit des eaux usées dans l'ensemble de ces émissaires.

Dans l'exemple de réalisation qui a été décrit ci-dessus, la capacité du tunnel 3 peut être encore accrue en réalisant une branche supplémentaire de tunnel s'étendant par exemple de Colombes à Chatou comme cela est également montré dans la figure 3. Vue en plan, cette branche de tunnel croise les émissaires 1c, 1d et le auxquels elle peut être reliée par des conduites semblables à la conduite 6 des figures 4a à 4e. Dans ces conditions, non seulement on augmente la capacité de stockage du tunnel 3, mais on réalise un maillage de tous les émissaires la à le permettant de régulariser leurs débits respectifs.

On notera également que le tunnel 3 peut être éventuellement utilisé pour by-passer une partie du cours de la Seine entre La Briche et Achères, permettant ainsi de régulariser dans une certaine mesure le débit de la Seine elle-même entre ces deux points.

D'après ce qui précède, on voit que l'installation de la présente invention permet de produire de l'énergie électrique non seulement en période de pointe de la consommation d'énergie, mais aussi en cas de défaillance d'un élément de production ou d'une ligne de transport d'énergie. Elle permet en outre de régulariser le débit des eaux pluviales ou des eaux usées dans le réseau d'assainissement d'une agglomération urbaine. Elle permet de réaliser un maillage des émissaires du réseau d'assainissement et, par suite, un délestage de l'un d'entre eux vers les autres. On peut diminuer de la sorte les rejets programmés ou accidentels d'eaux usées dans le milieu naturel. L'invention permet également d'améliorer l'écoulement d'un fleuve en by- passant une partie de son cours. Enfin, l'invention permet d'interconnecter des postes électriques de transformation pour augmenter la fiabilité de fonctionnement du réseau, sans avoir à créer des lignes aériennes difficiles a implanter et inesthétiques en milieu urbain.

Il va de soi que les modes de réalisation de l'invention qui ont été décrits ci-dessus ont été donnés à titre d'exemple purement indicatif et nullement limitatif, et que de nombreuses modifications peuvent être facilement apportées par l'homme de l'art sans pour autant sortir du cadre de l'invention. C'est ainsi notamment qu'on peut utiliser comme réservoir supérieur 2 à la fois une ou plusieurs étendues d'eau naturelles ou artificielles, s'il y en a, et une ou plusieurs cavités creusées ou aménagées dans le sol. Par ailleurs, la pompe 13 des figures 1 et 2 peut être remplacée par une centrale hydroélectrique réversible semblable à la centrale 5, si on utilise la capacité du réseau d'assainissement 1 comme réservoir d'eau pour la production d'énergie électrique d'une façon analogue à ce qui est montré dans la partie droite de la figure 4c. En outre, au lieu d'implanter la ou les centrales hydroélectriques à une ou aux extrémités du tunnel 3, elles peuvent être implantées en des points quelconques du tunnel 3. Par exemple, une centrale hydroélectrique pourrait être implantée au pied de la conduite 6 de la figure 4a et, dans ce cas. une prise d'eau en Seine peut être aussi prévue à Colombes et raccordée à la conduite 6 d'une manière analogue à celle décrite à propos de la conduite 4 et montrée dans la figure 4a.

## Revendications

1. Installation pour la production d'énergie électrique, comprenant au moins un premier réservoir d'eau (2) situé à un premier niveau, au moins un deuxième réservoir d'eau (3) situé profondément dans le sol à un second niveau nettement plus bas que le premier niveau, au moins une première conduite (4) reliant les deux réservoirs et munie d'une vanne (9) mettant les deux réservoirs en communication lorsqu'elle est ouverte, au moins une centrale hydroélectrique (5) située au second niveau ou à un niveau proche de celui-ci et comportant au moins un groupe pompe-turbine réversible qui est raccordé, du point de vue hydraulique, à ladite première conduite (4) et qui est connectable (par 8), du point de vue électrique, à un réseau de distribution de courant, caractérisée en ce que pour permettre une régularisation d'un écoulement des eaux pluviales d'un réseau d'assainissement (1), l'installation comprend en outre au moins une seconde conduite (5, 7, 26) munie d'une vanne (11, 12, 27) et reliant ledit réseau d'assainissement (1) au second réservoir (3) directement et/ou à travers le groupe pompe-turbine de la centrale hydroélectrique (5), l'eau stockée temporairement dans le second réservoir (3) étant renvoyée au réseau d'assainissement (1) par une pompe (13) et/ou par ledit groupe pompe-turbine.

2. Installation selon la revendication 1, caractérisée en ce que le premier réservoir (2) est une étendue d'eau naturelle, telle qu'une rivière ou lac, et le second réservoir (3) est un réservoir aménagé dans le sous-sol.

3. Installation selon la revendication 2, caractérisée en ce que les premier et second réservoirs (2 et 3) sont tous les deux aménagés dans le sous-sol à des profondeurs différentes.

4. Installation selon l'une quelconque des revendications 1 à 3, caractérisée en ce qu'au moins le second réservoir (3) est réalisé sous la forme d'un tunnel.

5. Installation selon la revendication 4, caractérisée en ce que, dans une vue en plan, le tunnel formant le second réservoir (3) suit un parcours qui croise plusieurs branches (1a-1e) du réseau d'assainissement (1) et en ce qu'à chaque croisement est prévue une conduite (6) qui met le tunnel en communication avec la branche correspondante du réseau d'assainissement.

6. Installation selon l'une quelconque des revendications 1 à 5, caractérisée en ce qu'une pompe de relèvement (13) est insérée dans au moins une des secondes conduites (6) reliant le réseau d'assainissement (1) au second réservoir (3).

7. Installation selon l'une quelconque des revendications 3 à 6, caractérisée en ce qu'elle comprend au moins une autre conduite (15) munie d'une vanne (16) et reliant le reseau d'assainissement (1) au premier réservoir (2).

8. Installation selon l'une quelconque des revendications 2, 4 à 6, caractérisée en ce que l'extrémité inférieure de la seconde conduite (6) est raccordée directement au second réservoir (3) à travers une centrale hydroélectrique réversible.

9. Installation selon l'une quelconque des revendications 2, 4 à 6, caractérisée en ce que l'extrémité inférieure de la seconde conduite (7) est raccordée à la première conduite (4) entre la vanne (9) de celle-ci et la centrale hydroélectrique (5).

10. Installation selon l'une quelconque des revendications 2, 4 à 9, caractérisée en ce que le premier réservoir (2) est une rivière, en ce que le réseau d'assainissement (1) aboutit à une station d'épuration (17) comportant une unité de prétraitement (18) suivie d'au moins une unité de traitement (19) qui rejette les eaux traitées à la rivière (2) par un canal d'évacuation (21), et en ce que l'extrémité supérieure de la seconde conduite (24, 26) est raccordée au réseau d'assainissement (1) en au moins un des points suivants, à savoir en un point situé entre l'unité de prétraitement (18) et l'unité de traitement (19), et en un point du canal d'évacuation (21).

11. Installation selon la revendication 10, caractérisée en ce qu'une centrale hydroélectrique (5b) est prévue à l'extrémité inférieure de la seconde conduite (24, 26).

12. Installation selon la revendication 11, caractérisée en ce que le second réservoir (3) est un tunnel dont une première extrémité se trouve au dessous de la station d'épuration (17), l'extrémité inférieure de la seconde conduite (24, 26) étant raccordée à cette première extrémité du tunnel (3) à travers la centrale hydroélectrique (5b), et dont une seconde extrémité se trouve au dessous d'un point de la rivière (2) situé en amont du point où ledit canal d'évacuation (21) débouche dans la rivière, l'extrémité inférieure de la première conduite (4) étant raccordée à cette seconde extrémité du tunnel (3) à travers une autre centrale hvdroélectrique (5a).

13. Installation selon la revendication 12, caracterisée en ce que plusieurs cheminées d'équilibrage de pression (28) sont prévues entre le tunnel (3) et la surface du sol, et en ce qu'au moins certaines des cheminées d'équilibrage de pression, les première et seconde conduites (4 et 6) et le tunnel (3) servent aussi de passages pour des lignes électriques (8, 29, 31b-31d) interconnectant le ou les centrales hydroélectriques (5, 5a, 5b) et un ou des postes de transformation de courant (22a-22f) d'un réseau de distribution de courant.

## Patentansprüche

1. Einrichtung zur Erzeugung von elektrischer Energie, umfassend mindestens ein erstes Wasserreservoir (2), das auf einem ersten Niveau gelegen ist, mindestens ein zweites Wasserreservoir (3), das tief in der Erde auf einem zweiten Niveau gelegen ist, welches deutlich tiefer liegt als das erste Niveau, mindestens eine erste Rohrleitung (4), welche die beiden Reservoirs verbindet und mit einem Schieber (9) versehen ist, der die beiden Reservoirs miteinander in Verbindung bringt, wenn er geöffnet wird, mindestens ein Wasserkraftwerk (5), das auf dem zweiten Niveau oder auf einem Niveau gelegen ist, welches diesem nahe ist, und umfassend mindestens eine umsteuerbare Pumpen-Turbinen-Gruppe, die hydraulisch gesehen mit der besagten ersten Rohrleitung (4) verbunden ist und die elektrisch gesehen (durch 8) mit einem Stromverteilernetz verbindbar ist, dadurch gekennzeichnet, daß zum Ermöglichen einer Regulierung eines Ablaufs von Regenwasser eines Oberflächenwasser-Sammelnetzes (1) die Einrichtung außerdem mindestens eine zweite Rohrleitung (6, 7, 26) umfaßt, die mit einem Schieber (11, 12, 27) versehen ist und das besagte Oberflächenwasser-Sammelnetz (1) unmittelbar und/oder über die Pumpen-Turbinen-Gruppe des Wasserkraftwerks (5) mit dem zweiten Reservoir (3) verbindet, wobei das vorübergehend im zweiten Reservoir (3) gespeicherte Wasser durch eine Pumpe (13) und/oder durch die besagte Pumpen-Turbinen-Gruppe zum Oberflächenwasser-Sammelnetz (1) zurückgeführt wird.

2. Einrichtung nach Anspruch 1, dadurch gekennzeichnet, daß das erste Reservoir (2) eine natürliche Wasserfläche wie ein Fluß oder See ist, und daß das zweite Reservoir (3) ein unterirdisch angelegtes Reservoir ist.

3. Einrichtung nach Anspruch 2, dadurch gekennzeichnet, daß das erste und zweite Reservoir (2 und 3) alle beide in unterschiedlicher Tiefe unterirdisch angelegt sind.

4. Einrichtung nach einem beliebigen der Ansprüche 1 bis 3, dadurch gekennzeichnet, daß mindestens das zweite Reservoir (3) in Form eines Tunnels ausgeführt ist.

5. Einrichtung nach Anspruch 4, dadurch gekennzeichnet, daß der Tunnel, welcher das zweite Reservoir (3) bildet, in einer Draufsicht einem Weg folgt, der mehrere Zweige (la-le) des Oberflächenwasser-Sammelnetzes (1) kreuzt, und daß an jeder Kreuzung eine Rohrleitung (6) vorgesehen ist, die den Tunnel mit dem entsprechenden Zweig des Oberflächenwasser-Sammelnetzes verbindet.

6. Einrichtung nach einem beliebigen der Ansprüche 1 bis 5, dadurch gekennzeichnet, daß eine Hebepumpe (13) in mindestens eine der zweiten Rohrleitungen (6) eingebaut ist, welche das Oberflächenwasser-Sammelnetz (1) mit dem zweiten Reservoir (3) verbinden.

7. Einrichtung nach einem beliebigen der Ansprüche 3 bis 6, dadurch gekennzeichnet, daß sie mindestens eine andere Rohrleitung (15) umfaßt, die mit einem Schieber (16) versehen ist und das Oberflächenwasser-Sammelnetz (1) mit dem ersten Reservoir (2) verbindet.

8. Einrichtung nach einem beliebigen der Ansprüche 2, 4 bis 6, dadurch gekennzeichnet, daß das untere Ende der zweiten Rohrleitung (6) über ein umsteuerbares Wasserkraftwerk unmittelbar mit dem zweiten Reservoir (3) verbunden ist.

9. Einrichtung nach einem beliebigen der Ansprüche 2, 4 bis 6, dadurch gekennzeichnet, daß das untere Ende der zweiten Rohrleitung (7) mit der ersten Rohrleitung (4) zwischen deren Schieber (9) und dem Wasserkraftwerk (5) verbunden ist.

10. Einrichtung nach einem beliebigen der Ansprüche 2, 4 bis 9, dadurch gekennzeichnet, daß das erste Reservoir (2) ein Fluß ist, daß das Oberflächenwasser-Sammelnetz (1) an einer Kläranlage (17) endet, umfassend eine von mindestens einer Behandlungseinheit (19) gefolgte Vorbehandlungseinheit (18), welche das aufbereitete Wasser über einen Ablaßkanal (21) in den Fluß (2) zurückführt, und daß das obere Ende der zweiten Rohrleitung (24, 26) mit dem Oberflächenwasser-Sammelnetz (1) an mindestens einer der folgenden Stellen verbunden ist, nämlich an einer zwischen der Vorbehandlungseinheit (18) und der Behandlungseinheit (19) gelegenen Stelle und an einer Stelle des Ablaßkanals (21).

11. Einrichtung nach Anspruch 10, dadurch gekennzeichnet, daß ein Wasserkraftwerk (5b) am unteren Ende der zweiten Rohrleitung (24, 26) vorgesehen ist.

12. Einrichtung nach Anspruch 11, dadurch gekennzeichnet, daß das zweite Reservoir (3) ein Tunnel ist, von dem sich ein erstes Ende unter der Kläranlage (17) befindet, wobei das untere Ende der zweiten Rohrleitung (24, 26) über das Wasserkraftwerk (5b) mit diesem ersten Ende des Tunnels (3) verbunden ist, und von dem sich ein zweites Ende unter einer Stelle des Flusses (2) befindet, die stromaufwärts von der Stelle gelegen ist, wo der besagte Ablaßkanal (21) in den Fluß mündet, wobei das untere Ende der ersten Rohrleitung (4) über ein anderes Wasserkraftwerk (5a) mit diesem zweiten Ende des Tunnels (3) verbunden ist.

13. Einrichtung nach Anspruch 12, dadurch gekennzeichnet, daß mehrere Druckausgleichsschächte (28) zwischen dem Tunnel (3) und der Erdoberfläche vorgesehen sind, und daß mindestens gewisse der Druckausgleichsschächte, die erste und zweite Rohrleitung (4 und 6) und der Tunnel (3) auch als Durchlässe für Stromleitungen (8, 29, 31b bis 31d) dienen, welche das oder die Wasserkraftwerke (5, 5a, 5b) und eine oder mehrere Stromumspannstationen (22a bis 22f) eines Stromverteilernetzes untereinander verbinden.

## Claims

1. An installation for production al'electrical energy, comprising:
at least a first water reservoir (2) situated at a first level,
at least a second water reservoir (3) situated deep in the ground at a second level which is markedly lower than the first level,
at least a first conduit (4) connecting the two reservoirs and provided with a slide valve (9) which connects the two reservoirs when open,
at least one hydro-electric station (5) which is situated at the second level or at a level close thereto and has at least one reversible pump-turbine group which is connected hydraulically to the said first conduit (4) and can be connected electrically (by 8) to a current distribution network,
**characterised in that** to allow regularisation of a rainwater flow of a sewer system (1), the installation also comprises at least one second conduit (6, 7, 26) provided with a slide valve (11, 12, 27) and connecting the said sewer system (1) to the second reservoir (3) in a direct manner and/or via the pump-turbine group of the hydro-electric station (5), the water temporarily stored in the second reservoir (3) being returned to the sewer system (1) by a pump (13) and/or by the said pump-turbine group.

2. An installation in accordance with claim 1, **characterised in that** the first reservoir (2) is a natural expanse of water, such as a river or lake, and the second reservoir (3) is a reservoir provided underground.

3. An installation in accordance with claim 2, **characterised in that** the first and second reservoirs (2 and 3) are both provided underground, at different depths.

4. An installation in accordance with any one of claims 1 to 3, **characterised in that** at least the second reservoir (3) is in the form of a tunnel.

5. An installation in accordance with claim 4, **characterised in that** in plan view, the tunnel forming the second reservoir (3) follows a course which crosses a plurality of branches (1a - 1e) of the sewer system (1), and in that a conduit (6) is provided at each point of crossing and connects the tunnel to the corresponding branch of the sewer system.

6. An installation in accordance with any one of claims 1 to 5, **characterised in that** a raising pump (13) is inserted in at least one of the second conduits (6) connecting the sewer system (1) to the second reservoir (3).

7. An installation in accordance with any one of claims 3 to 6, **characterised in that** it comprises at least one further conduit (15) provided with a slide valve (16) and connecting the sewer system (1) to the first reservoir (2).

8. An installation in accordance with any one of claims 2, 4 to 6, **characterised in that** the lower end of the second conduit (6) is connected directly to the second reservoir (3) via a reversible hydro-electric station.

9. An installation in accordance with any one of claims 2, 4 to 6, **characterised in that** the lower end of the second conduit (7) is connected to the first conduit (4) between the slide valve (9) thereof and the hydro-electric station (5).

10. An installation in accordance with any one of claims 2, 4 to 9, **characterised in that** the first reservoir (2) is a river, in that the sewer system (1) ends at a purification plant (17) comprising a pre-treatment unit (18) followed by at least one treatment unit (19) which discharges the treated water into the river (2) via a discharge channel (21), and in that the upper end of the second conduit (24, 26) is connected to the sewer system (1) at at least one of the following points, namely at a point situated between the pre-treatment unit (18) and the treatment unit (19) and at a point in the discharge channel (21).

11. An installation in accordance with claim 10, **characterised in that** a hydro-electric station (5b) is provided at the lower end of the second conduit (24, 26).

12. An installation in accordance with claim 11, **characterised in that** the second reservoir (3) is a tunnel, and a first end thereof is located below the purification plant (17), the lower end of the second conduit (24, 26) being connected to this first end of the tunnel (3) via the hydro-electric station (5b), and a second end of the said tunnel is located below a point of the river (2) situated upstream of the point where the said discharge channel (21) opens into the river, the lower end of the first conduit (4) being connected to this second end of the tunnel (3) via a further hydro-electric station (5a).

13. An installation in accordance with claim 12, **characterised in that** a plurality of pressure-balancing shafts (28) are provided between the tunnel (3) and the ground surface, and in that at least some of the pressure-balancing shafts, the first and second conduits (4 and 6) and the tunnel (3) also act as passages for electric lines (8, 29, 31b-31d) interconnecting the hydro-electric station(s) (5, 5a, 5b) and current-transforming station(s) (22a-22f) of a current distribution network.
